# EUROPEAN PATENT SPECIFICATION

(11) **EP 3 733 953 B1**
(45) Date of publication and mention of the grant of the patent: **16.03.2022**
(21) Application number: 20168910.6
(22) Date of filing: 09.04.2020
(51) Int. Cl.: D06F 39/02, D06F 33/37, G05D 11/00

(54) **WASHING MACHINE**
WASCHMASCHINE
MACHINE À LAVER

(30) Priority: 28.04.2019 CN 201910352430
(43) Date of publication of application: 04.11.2020
(73) Proprietor: BSH Hausgeräte GmbH, 81739 München (DE)
(72) Inventor: Wu, Baokun, Nanjing, 210046 (CN); Yao, Boli, Nanjing City, 210000 (CN); Liu, Shuai, Nanjing, 210046 (CN)

(56) References cited:
- WO-A1-2017/114637
- WO-A1-2019/037993
- DE-A1- 2 739 792

## Description

Embodiments of the present invention relate to the field of household appliance technologies, and in particular, to a washing machine.

Washing machines become common household appliances with the development of science and technology and the improvement of people's living standards. An existing washing machine may be provided with a laundry detergent dispenser. During laundry washing, an appropriate amount of laundry detergent may be dispensed by the laundry detergent dispenser.

Currently, a gear pump and a direct current motor are usually used in the laundry detergent dispenser to implement automatic dispensing of laundry detergent, or a stepping motor and a piston are used to implement automatic dispensing of laundry detergent. However, the costs of implementing automatic dispensing of laundry detergent are relatively high.

The DE 27 39 792 A1 concerns a washing machine with a storage container for a liquid detergent and a pump for pumping the detergent from the storage container to water, wherein the pump is driven by a water turbine which is interposed in a service water supply line.

The WO 2019/037993 A1 concerns an automatic liquid detergent dosing unit for use in a washing machine, comprising a detergent dispenser with at least two receptacles and a tub outlet enabling the detergent to be swept by means of water. A hydraulic pump enables the liquid in the detergent dispenser to be dosed in order to be transferred to a washing environment in the tub.

The WO 2017/114637 A1 concerns a washing machine with a detergent housing and a dosing receptacle that has an inlet end connected to the detergent housing and an outlet end connected to a tub, wherein the detergent is transferred. Furthermore, water is enabled to enter the dosing receptacle and a wheel having fins enables the detergent to be directed to the outlet end.

Embodiments of the present invention are intended to provide an inexpensive washing machine that automatically dispenses detergent.

To resolve the foregoing technical problems, the present invention provides a washing machine, including: a controller, a mixing chamber, and a detergent dispenser, the detergent dispenser including: a first branch pipe, a first cam, an impeller, a first piston chamber, a first piston, and a first liquid box, where the controller is configured for controlling the first branch pipe to be opened to admit water when it is detected that a working state of the washing machine satisfies a first condition, and controlling the first branch pipe to be closed when it is detected that a working state of the detergent dispenser satisfies a second condition; a plurality of first pawls are disposed on the first cam, and enable the first cam to rotate in a first direction unidirectionally; the impeller is coaxially connected to the first cam, and is adapted for driving the first cam to rotate in the first direction under the impact of water flow in the first branch pipe; the first piston chamber is connected to the first liquid box and the mixing chamber separately; and the first piston is located in the first piston chamber, and is connected to the first cam, and when the first cam rotates in the first direction, the first piston reciprocates in the first piston chamber, to draw a first liquid in the first liquid box into the first piston chamber, and squeeze the first liquid drawn into the first piston chamber into the mixing chamber. Compared with the prior art, the technical solution in this embodiment of the present invention has the following beneficial effects:
The controller is configured to control the first branch pipe to be opened to admit water when it is detected that the working state of the washing machine satisfies the first condition, the impeller drives the first cam to rotate in the first direction under the impact of water flow in the first branch pipe, and the first cam rotates to drive the first piston to reciprocate in the first piston chamber, to draw the first liquid in the first liquid box into the first piston chamber and squeeze the first liquid into the mixing chamber. The controller is configured to control the first branch pipe to be closed when it is detected that the working state of the detergent dispenser satisfies the second condition. The impeller stops rotating due to the loss of impact power of water flow. The first piston subsequently stops moving in the first piston chamber. The first liquid is dispensed, thereby implementing automatic detergent dispensing. The impact power of water flow is used as power for driving the impeller and the first cam to rotate. Another high-cost power device such as a motor does not need to be used to supply power, thereby ensuring low costs.

Optionally, the first piston chamber includes a first sub-chamber and a second sub-chamber, the first sub-chamber is in communication with the first liquid box, and a first one-way valve is disposed on the first sub-chamber, and enables the first liquid in the first liquid box to flow into the first sub-chamber unidirectionally; the second sub-chamber is in communication with the mixing chamber; and a second one-way valve is disposed on the second sub-chamber, and enables the first liquid drawn into the first piston chamber to flow into the mixing chamber unidirectionally.

Optionally, the detergent dispenser further includes: a second cam, a plurality of second pawls, a second branch pipe, a second liquid box, a second piston chamber, and a second piston, where the plurality of second pawls are disposed on the second cam, and enable the second cam to rotate in a second direction unidirectionally; the controller is configured for controlling the second branch pipe to be opened to admit water when it is detected that a working state of the washing machine satisfies a third condition, and controlling the second branch pipe to be closed when it is detected that a working state of the detergent dispenser satisfies a fourth condition; the impeller is coaxially connected to the second cam, and is adapted for driving the second cam to rotate in the second direction under the impact of water flow in the second branch pipe; the second piston chamber is connected to the second liquid box and the mixing chamber separately; and the second piston is located in the second piston chamber, and is connected to the second cam, and when the second cam rotates in the second direction, the second piston reciprocates in the second piston chamber, to draw a second liquid in the second liquid box into the second piston chamber, and squeeze the second liquid drawn into the second piston chamber into the mixing chamber. The second branch pipe is controlled to be opened to automatically dispense the second liquid.

Optionally, the second piston chamber includes a third sub-chamber and a fourth sub-chamber, the third sub-chamber is in communication with the second liquid box, and a third one-way valve is disposed on the third sub-chamber, and enables the second liquid in the second liquid box to flow into the third sub-chamber unidirectionally; and the fourth sub-chamber is in communication with the mixing chamber, and a fourth one-way valve is disposed on the fourth sub-chamber, and enables the second liquid drawn into the second piston chamber to flow into the mixing chamber unidirectionally.

Optionally, the washing machine further includes: a main pipe that is in communication with the first branch pipe and the second branch pipe separately, and an outlet of the first branch pipe and an outlet of the second branch pipe separately face two sides of the impeller in a radial direction.

Optionally, the washing machine further includes: a pre-washing pipe, in communication with the main pipe, and located upstream the first branch pipe and the second branch pipe, where when the first branch pipe and the second branch pipe are closed, water can be injected into the washing machine according to an actual requirement.

Optionally, a diameter of the main pipe is greater than a diameter of the first branch pipe and a diameter of the second branch pipe.

Optionally, the detergent dispenser further includes: a counter, located on an impeller shaft of the impeller, and configured for recording the number of revolutions of the first cam.

Optionally, the second condition includes that: the number of revolutions of the first cam corresponding to a count of the counter satisfies a preset number of revolutions.

Optionally, a water distribution plate is disposed in the mixing chamber.
FIG. 1 is a front view of a washing machine according to an embodiment of the present invention;
FIG. 2 is a left view of a washing machine according to an embodiment of the present invention;
FIG. 3 is a partial enlarged view of I in FIG. 2;
FIG. 4 is a partial schematic structural diagram of a detergent dispenser according to an embodiment of the present invention;
FIG. 5 is a schematic structural diagram of a first cam according to an embodiment of the present invention;
FIG. 6 is a schematic structural diagram of a second cam according to an embodiment of the present invention;
FIG. 7 is a schematic structural diagram of a one-way valve according to an embodiment of the present invention; and
FIG. 8 is a schematic structural diagram of a water distribution plate according to an embodiment of the present invention.

To make the objectives, features, and beneficial effects of the embodiments of the present invention more comprehensible, the specific embodiments of the present invention are further described below in detail with reference to the accompanying drawings.

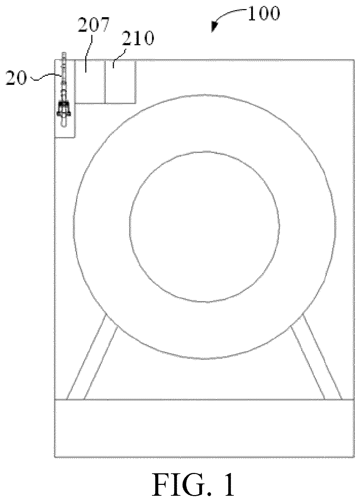

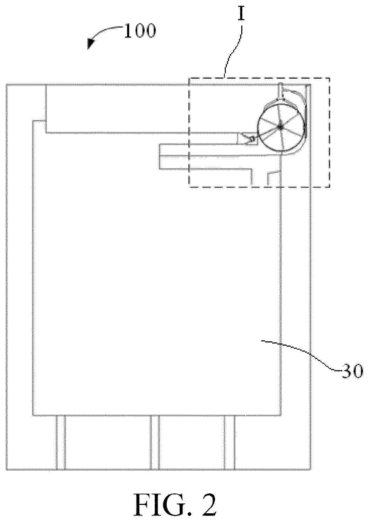

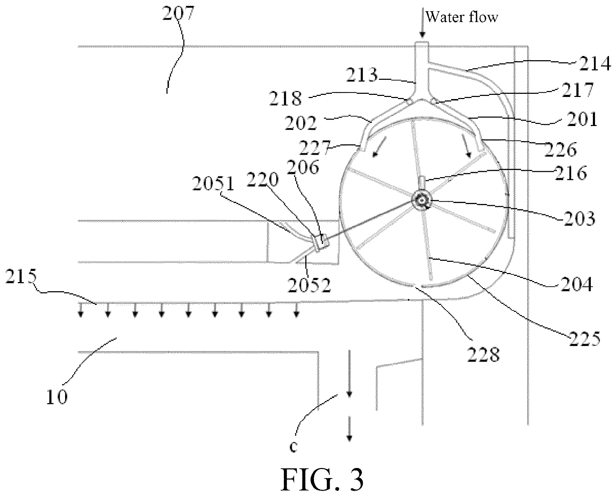

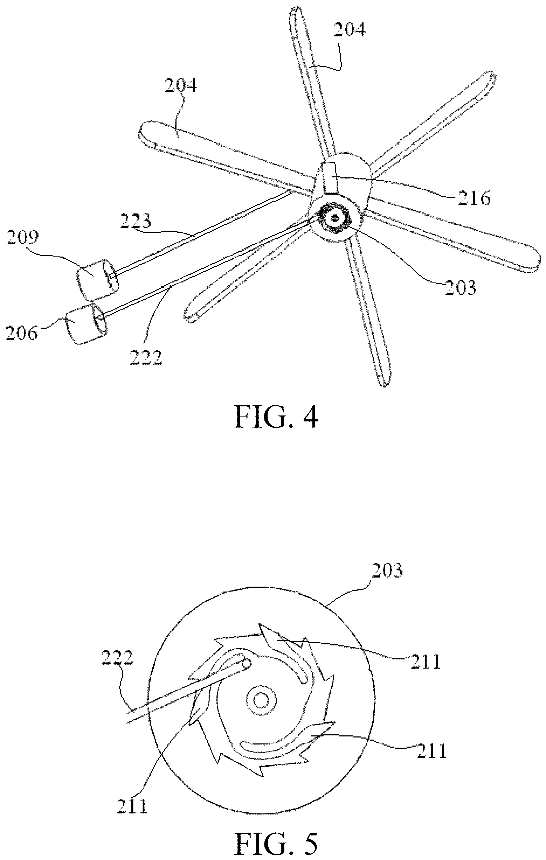

FIG. 1 is a front view of a washing machine according to an embodiment of the present invention. FIG. 2 is a left view of a washing machine according to an embodiment of the present invention. FIG. 3 is a partial enlarged view of I in FIG. 2. FIG. 4 is a partial schematic structural diagram of a detergent dispenser according to an embodiment of the present invention. The following describes the structure of the washing machine with reference to FIG. 1 to FIG. 4. An arrow direction in FIG. 3 represents a rotational direction of an impeller.

During specific implementation, a washing machine 100 includes a controller (not shown in the figure), a mixing chamber 10, and a detergent dispenser 20. The detergent dispenser 20 may dispense detergent into the mixing chamber 10, and the detergent and water are mixed by the mixing chamber 10 to flow into an inner drum 30 of the washing machine 100 through an outlet c of the mixing chamber 10.

Referring to FIG. 3 to FIG. 5, the detergent dispenser 20 includes a first branch pipe 201, a first cam 203, an impeller 204, a first piston chamber (not shown in FIG. 3), a first piston 206, and a first liquid box 207. The first liquid box 207 is filled with a first liquid. The first liquid may be detergent.

The controller is configured to detect a working state of the washing machine 100, to control the first branch pipe 201 to be opened to admit water when it is detected that the working state of the washing machine 100 satisfies a first condition, and control the first branch pipe 201 to be closed when it is detected that a working state of the detergent dispenser 20 satisfies a second condition.

For example, a selected washing mode is washing, rinsing, and drying. The first condition is that after the washing machine 100 is started and the washing machine 100 enters a washing program for a preset period, the first branch pipe 201 is controlled to be opened.

For another example, a selected washing mode is soaking, washing, two times of rinsing, and drying. The first condition is that after the washing machine 100 is started and the washing machine 100 has entered a soaking program for water injection, the first branch pipe 201 is controlled to be opened to admit water.

It may be understood that the first condition is different according to the selected washing mode of the washing machine 100, and may be specifically set according to a type and a washing mode of the washing machine 100 or an actual application scenario and requirement.

In this embodiment of the present invention, the second condition may be that a dispensing amount of the first liquid reaches a preset amount.

In this embodiment of the present invention, a one-way valve 217 is disposed on the first branch pipe 201, and the controller controls the opening and closing of the one-way valve 217 to control the first branch pipe 201 to be opened or closed. It may be understood that another switch device may be used to control the first branch pipe 201 to be opened or closed.

A plurality of first pawls 211 are disposed on the first cam 203, and enable the first cam 203 to rotate in a first direction unidirectionally but not rotate in a second direction opposite the first direction. The impeller 204 may be coaxially connected to the first cam 203. The plurality of first pawls 211 match teeth of an impeller shaft of the impeller 204. When water flow in the first branch pipe 201 impacts the impeller 204 and when the impeller 204 rotates in the first direction, the first cam 203 is driven to rotate in the first direction.

In this embodiment of the present invention, the number of the first pawls 211 is 3. It may be understood that the number of the first pawls 211 may be 4, 5 or another value according to an actual application scenario and requirement.

The first piston chamber is connected to the first liquid box 207 and the mixing chamber 10 separately. The first piston 206 is located in the first piston chamber, and is connected to the first cam 203. When the first cam 203 rotates in the first direction, the first piston 206 reciprocates in the first piston chamber, to draw the first liquid in the first liquid box 207 into the first piston chamber, and squeeze the first liquid drawn into the first piston chamber into the mixing chamber 10. When the first liquid is detergent, thereby implementing automatic detergent dispensing.

In an embodiment of the present invention, the first piston chamber includes a first sub-chamber 2051 and a second sub-chamber 2052 that are in communication with the first piston chamber. The first sub-chamber 2051 is in communication with the first liquid box 207. A first one-way valve is disposed on the first sub-chamber 2051, and enables the first liquid in the first liquid box 207 to flow into the first sub-chamber 2051 unidirectionally. The second sub-chamber 2052 is in communication with the mixing chamber 10. A second one-way valve is disposed on the second sub-chamber 2052, and enables the first liquid drawn into the first piston chamber to flow into the mixing chamber 10 unidirectionally.

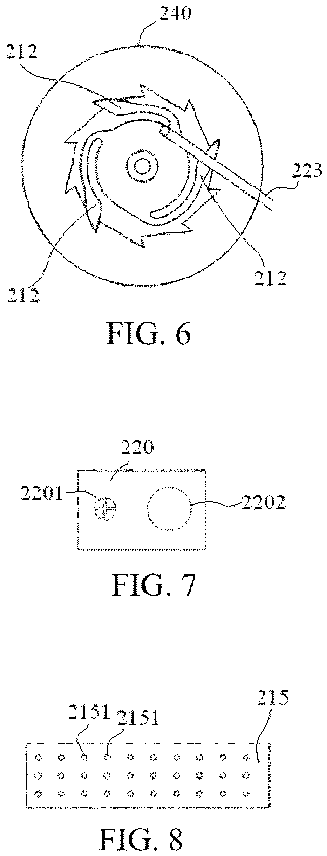

In another embodiment of the present invention, the first piston chamber includes the first sub-chamber 2051 and the second sub-chamber 2052 that are in communication with the first piston chamber. As shown in FIG. 7, a one-way valve 220 is disposed at a position in which the first sub-chamber 2051 and the second sub-chamber 2052 are in communication with the first piston chamber. The one-way valve 220 may be a rubber one-way valve. The one-way valve 220 is provided with a first one-way connection hole 2201 and a second one-way connection hole 2202. The one-way valve 220 may enable the first piston chamber to be selectively in communication with one of the first sub-chamber 2051 and the second sub-chamber 2052. For example, the first one-way connection hole 2201 is connected to the first sub-chamber 2051, and the second one-way connection hole 2202 is connected to the second sub-chamber 2052. When the first piston 206 moves in a direction away from the first liquid box 207, the first sub-chamber 2051 is in communication with the first piston chamber, and the first liquid in the first liquid box 207 unidirectionally flows into the first sub-chamber 2051 through the first one-way connection hole 2201. In this case, the second one-way connection hole 2202 is closed, and the second sub-chamber 2052 is not in communication with the first piston chamber. When the first piston 206 moves in a direction close to the first liquid box 207, the second sub-chamber 2052 is in communication with the mixing chamber 10, and the first liquid drawn into the first piston chamber unidirectionally flows into the mixing chamber 10 through the second one-way connection hole 2202. In this case, the first one-way connection hole 2201 is closed, and the first sub-chamber 2051 is not in communication with the first piston chamber.

It may be known from the foregoing solutions that the controller may control the first branch pipe 201 to be opened to admit water when it is detected that the working state of the washing machine 100 satisfies the first condition. The impeller 204 drives the first cam 203 to rotate in the first direction under the impact of water flow in the first branch pipe 201, and the first cam 203 rotates to drive the first piston 206 to reciprocate in the first piston chamber, to draw the first liquid in the first liquid box 207 into the first piston chamber and squeeze the first liquid into the mixing chamber 10. The controller controls the first branch pipe 201 to be closed when it is detected that the working state of the detergent dispenser 20 satisfies the second condition. The impeller 204 stops rotating due to a loss of impact power of water, the first piston 206 also stops moving in the first piston chamber, and the first liquid is dispensed, thereby implementing automatic dispensing of the first detergent. Impact power of the water flow is used as power for driving the impeller 204 and the first cam 203 to rotate. Another high-cost power device such as a motor does not need to be used to supply power, thereby ensuring low costs.

During specific implementation, to maintain a fluffy, soft, and relatively natural state of laundry, a fabric softener may be dispensed into the washing machine 100 during laundry washing and used for treat laundry. FIG. 6 is a schematic structural diagram of a second cam. Referring to FIG. 1 to FIG. 6, in this embodiment of the present invention, to implement automatic dispensing of the fabric softener, the detergent dispenser 20 further includes a plurality of second pawls 212, a second branch pipe 202, a second liquid box 210, a second piston chamber (not shown in the figure), and a second piston 209.

The plurality of second pawls 212 are disposed on the second cam 240, and enable the second cam 240 to rotate in a second direction unidirectionally but not rotate in the first direction opposite the second direction. Specifically, the plurality of second pawls 212 match the teeth of the impeller shaft. When water flow in the second branch pipe 202 impacts the impeller 204 and when the impeller 204 rotates in the second direction, the second cam 240 is driven to rotate in the second direction.

In this embodiment of the present invention, the number of second pawls 212 is 3. It may be understood that the number of second pawls 212 may be 4, 5 or another value according to an actual application scenario and requirement.

The controller controls the second branch pipe 202 to be opened to admit water when it is detected that the working state of the washing machine 100 satisfies a third condition, and controls the second branch pipe 202 to be closed when it is detected that the working state of the detergent dispenser 20 satisfies a fourth condition.

For example, the third condition is a preset period for entering a rinsing program. The controller may control the second branch pipe 202 to be opened to admit water when it is detected that the washing machine 100 has entered the rinsing program for the preset period. The fourth condition is that a dispensing amount of the second liquid satisfies a preset amount.

In this embodiment of the present invention, a one-way valve 218 may be disposed on the second branch pipe 202, and the controller controls the second branch pipe 202 to be closed or opened by controlling opening and closing of the one-way valve 218. It may be understood that another switch device may be used to control the second branch pipe 202 to be closed or opened in an actual application.

The impeller 204 drives the second cam 240 to rotate in the second direction under the impact of water flow in the second branch pipe 202. The second piston chamber is connected to the second liquid box 210 and the mixing chamber 10 separately. The second piston 209 is located in the second piston chamber, and is connected to the second cam 240. When the second cam 240 rotates in the second direction, the second piston 209 reciprocates in the second piston chamber, to draw the second liquid in the second liquid box 210 into the second piston chamber, and squeeze the second liquid drawn into the second piston chamber into the mixing chamber 10, thereby implementing dispensing of the second liquid. The first liquid is not dispensed during dispensing of the second liquid. The second liquid may be a fabric softener.

In an embodiment of the present invention, the second piston chamber includes a third sub-chamber (not shown in the figure) and a fourth sub-chamber (not shown in the figure) that may be in communication with the second piston chamber. The third sub-chamber is in communication with the second liquid box 210, a third one-way valve is disposed on the third sub-chamber, and enables the second liquid in the second liquid box 210 to flow into the third sub-chamber unidirectionally. The fourth sub-chamber is in communication with the mixing chamber 10 and a fourth one-way valve is disposed on the fourth sub-chamber, and enables the second liquid drawn into the second piston chamber to flow into the mixing chamber 10 unidirectionally.

In another embodiment of the present invention, the second piston chamber includes the third sub-chamber and the fourth sub-chamber that may be in communication with the second piston chamber. The one-way valve 220 is disposed at a position in which the third sub-chamber and the fourth sub-chamber are in communication with the second piston chamber. The one-way valve 220 may enable the second piston chamber to be selectively in communication with one of the third sub-chamber and the fourth sub-chamber. For example, the first one-way connection hole 2201 is connected to the third sub-chamber, and the second one-way connection hole 2202 is connected to the fourth sub-chamber. When the second piston 209 moves in a direction away from the second liquid box 210, the third sub-chamber is in communication with the second piston chamber, and the second liquid in the second liquid box 210 unidirectionally flows into the third sub-chamber through the first one-way connection hole 2201. In this case, the second one-way connection hole 2202 is closed, and the fourth sub-chamber is not in communication with the second piston chamber. When the second piston 209 moves in a direction toward the second liquid box 210, the fourth sub-chamber is in communication with the mixing chamber 10, and the second liquid drawn into the second piston chamber unidirectionally flows into the mixing chamber 10 through the second one-way connection hole 2202. In this case, the first one-way connection hole 2201 is closed, and the third sub-chamber is not in communication with the second piston chamber.

In this embodiment of the present invention, the washing machine 100 further includes a main pipe 213 that is in communication with the first branch pipe 201 and the second branch pipe 202 separately. An outlet of the first branch pipe 201 and an outlet of the second branch pipe 202 separately face two sides of the impeller 204 in a radial direction. The first branch pipe 201, the second branch pipe 202, and the main pipe 213 may have an inverted "Y" shape.

During specific implementation, an impeller protection cover 225 may further be provided outside the impeller 204. A first water inlet 226 and a water outlet 228 are disposed on the impeller protection cover 225. The first water inlet 226 is connected to the first branch pipe 201. Water flow enters the impeller protection cover 225 through the first water inlet 226 on the first branch pipe 201 and flows out of the impeller protection cover 225 through the water outlet 228.

During specific implementation, a second water inlet 227 may further be disposed on the impeller protection cover 225 and is connected to the second branch pipe 202. Water flow enters the impeller protection cover 225 through the second water inlet 227 on the second branch pipe 202 and flows out of the impeller protection cover 225 through the water outlet 228.

In this embodiment of the present invention, the washing machine 100 may further include a pre-washing pipe 214 that is in communication with the main pipe 213. The pre-washing pipe 214 is located upstream the first branch pipe 201 and the second branch pipe 202. When the first liquid or the second liquid does not need to be dispensed and the washing machine 100 needs to be filled with water, water may be filled into the washing machine 100 through the pre-washing pipe 214.

During specific implementation, the main pipe 213 is placed vertically, and a diameter of the main pipe 213 is greater than a diameter of the first branch pipe 201 and a diameter of the second branch pipe 202. Therefore, the water flow may fall directly, and the water flow does not fill the main pipe 213. Potential energy at inlets of the first branch pipe 201 and the second branch pipe 202 is greater than potential energy at the pre-washing pipe 214. Therefore, the water flow directly falls into the inlet of the first branch pipe 201 or the second branch pipe 202. The water flow flows into the pre-washing pipe 214 only when both the first branch pipe 201 and the second branch pipe 202 are closed.

During specific implementation, the detergent dispenser 20 further includes: a counter 216, located on the impeller shaft, and suitable for recording the number of revolutions of the first cam 203. The second condition may include that the number of revolutions of the first cam 203 recorded by the counter 216 satisfies a preset number of revolutions.

The counter 216 may also record the number of revolutions of the second cam 240. The fourth condition may be that the number of revolutions of the second cam 240 recorded by the counter 216 satisfies a preset number of revolutions. In this embodiment of the present invention, the counter 216 may be an encoder or may be another device that can record the number of revolutions of the first cam 203 or the second cam 240.

During specific implementation, FIG. 8 is a schematic structural diagram of a water distribution plate according to an embodiment of the present invention. The water distribution plate 215 is disposed in the mixing chamber 10. A plurality of holes 2151 are provided in the water distribution plate 215. The water distribution plate 215 can mix the first liquid or second liquid and water evenly, and then dispense the mixture into the inner drum 30 of the washing machine 100.

To facilitate better understanding and implementation of the embodiments of the present invention by those skilled in the art, a specific embodiment is combined as an example for description below.

During specific implementation, the detergent dispenser 20 may be disposed on a left side of the first liquid box 207 and the second liquid box 210, or disposed on a right side of the first liquid box 207 and the second liquid box 210. A position of the detergent dispenser 20 is correspondingly arranged according to the structure of the washing machine 100.

The controller of the washing machine 100 controls the one-way valve 217 on the first branch pipe 201 to be opened when it is detected that the washing program is run, to enable the first branch pipe 201 to be opened. Water in the main pipe 213 flows out through the first branch pipe 201 to rinse the impeller 204, so as to drive the first cam 203 to rotate clockwise. In this case, the second cam 240 does not rotate under the action of the plurality of second pawls 212. The first cam 203 rotates clockwise to drive a connecting rod 222 to move, to drive the first piston 206 connected to the connecting rod 222 to reciprocate in the first piston chamber. Detergent in the first liquid box 207 is drawn into the first piston chamber through the first sub-chamber 2051, the detergent drawn into the first piston chamber is squeezed into the mixing chamber 10 through the second sub-chamber 2052, and the detergent with the water flow flows into the inner drum 30 of the washing machine 100 through the water distribution plate 215. Every time the first piston 206 reciprocates, a fixed amount of detergent is drawn in or squeeze out. The number of revolutions of the first cam 203 is recorded by the encoder mounted on the impeller shaft, and the amount of detergent dispensed into the inner drum 30 of the washing machine 100 may be calculated according to the number of revolutions of the first cam 203. When the amount of dispensed detergent reaches a preset amount, the one-way valve 217 on the first branch pipe 201 is closed, so that the first branch pipe 201 is closed, and the detergent is dispensed. Fabric softener is not dispensed during dispensing of the detergent. In the washing mode, after the detergent is dispensed, the first branch pipe 201 and the second branch pipe 202 are both closed, and water enters the mixing chamber 10 through the pre-washing pipe 214 and enters the inner drum 30 of the washing machine 100 through the water distribution plate 215 and the mixing chamber 10.

The controller controls the one-way valve 218 on the second branch pipe 202 to be opened when it is detected that the rinsing program is run, to enable the second branch pipe 202 to be opened. Water in the main pipe 213 flows out of the second branch pipe 202 to rinse the impeller 204, so that the impeller 204 drives the second cam 240 to rotate counterclockwise. In this case, the first cam 203 does not rotate under the action of the plurality of first pawls 211. The second cam 240 rotates counterclockwise to drive a connecting rod 223 to move, to drive the second piston 209 connected to the connecting rod 223 to reciprocate in the second piston chamber. A fabric softener in the second liquid box 210 is drawn into the second piston chamber through the third sub-chamber, the fabric softener drawn into the second piston chamber is squeezed into the mixing chamber 10 through the fourth sub-chamber, and the fabric softener with the water flow flows into the inner drum 30 of the washing machine 100 through the water distribution plate 215. Every time the second piston 209 reciprocates, a fixed amount of fabric softener drawn in or squeezed out. The number of revolutions of the second cam 240 is recorded by the encoder, and the amount of fabric softener dispensed into the inner drum 30 of the washing machine 100 may be calculated according to the number of revolutions of the second cam 240. When the amount of dispensed fabric softener reaches a preset amount, the one-way valve 218 on the second branch pipe 202 is closed, so that the second branch pipe 202 is closed, and the fabric softener is dispensed. Detergent is not dispensed during dispensing of fabric softener. In the rinsing mode, after the fabric softener is dispensed, both the first branch pipe 201 and the second branch pipe 202 are closed, and water enters the mixing chamber 10 through the pre-washing pipe 214 and enters the inner drum 30 of the washing machine 100 through the water distribution plate 215 and the mixing chamber 10.

It should be noted that the washing machine 100 in this embodiment of the present invention may be a washing machine with a single washing function or may be a washingdrying machine integrating washing and drying functions or may be another device with a washing function.

Although specific implementation solutions have been described above, these implementation solutions are not intended to limit the scope of the present disclosure, even if a single implementation solution is only described for a specific feature. The feature example provided in the present disclosure is illustrative rather than limitative, unless otherwise stated. During specific implementation, if technically feasible, technical features of one or more dependent claim and technical features of independent claims may be combined according to an actual requirement. Technical features from corresponding independent claims may be combined in any appropriate manner instead of using only a specific combination provided in the claims.

The present invention is disclosed above, but the present invention is not limited thereto. A person of ordinary skill in the art can make various variations and modifications without departing from the scope of the present invention, which is defined by the appended

## Claims

1. A washing machine (100), comprising: a controller and a detergent dispenser (20), wherein the detergent dispenser (20) comprises: a first branch pipe (201), a first cam (203), an impeller (204) and a first liquid box (207), wherein
the controller is configured for controlling the first branch pipe (201) to be opened to admit water when it is detected that a working state of the washing machine (100) satisfies a first condition, and controlling the first branch pipe (201) to be closed when it is detected that a working state of the detergent dispenser (20) satisfies a second condition;
the impeller (204) is coaxially connected to the first cam (203), and is adapted for driving the first cam (203) to rotate in the first direction under the impact of water flow in the first branch pipe (201);
**characterized in that**
the washing machine also comprises a mixing chamber (10);
**in that** the detergent dispenser (10) also comprises a first piston chamber and a first piston (206);
**in that** a plurality of first pawls (211) are disposed on the first cam (203), and enable the first cam (203) to rotate in a first direction;
**in that** the first piston chamber is connected to the first liquid box (207) and the mixing chamber (10) separately; and
**in that** the first piston (206) is located in the first piston chamber, and is connected to the first cam (203), and when the first cam (203) rotates in the first direction, the first piston (206) reciprocates in the first piston chamber, to draw a first liquid in the first liquid box (207) into the first piston chamber, and squeeze the first liquid drawn into the first piston chamber into the mixing chamber (10).

2. The washing machine (100) according to claim 1, wherein the first piston chamber comprises a first sub-chamber (2051) and a second sub-chamber (2052), the first sub-chamber (2051) is in communication with the first liquid box (207), a first one-way valve is disposed on the first sub-chamber (2051), and enables the first liquid in the first liquid box (207) to flow into the first sub-chamber (2051) unidirectionally, the second sub-chamber (2052) is in communication with the mixing chamber (10), and a second one-way valve is disposed on the second sub-chamber (2052), and enables the first liquid drawn into the first piston chamber to flow into the mixing chamber (10) unidirectionally.

3. The washing machine (100) according to claim 1 or 2, wherein the detergent dispenser (20) further comprises: a second cam (240), a plurality of second pawls (212), a second branch pipe (202), a second liquid box (210), a second piston chamber, and a second piston (209), and the plurality of second pawls (212) are disposed on the second cam (240), and enable the second cam (240) to rotate in a second direction;
the controller is configured for controlling the second branch pipe (202) to be opened to admit water when it is detected that the working state of the washing machine (100) satisfies a third condition, and controlling the second branch pipe (202) to be closed when it is detected that the working state of the detergent dispenser (20) satisfies a fourth condition;
the impeller (204) is coaxially connected to the second cam (240), and is adapted for driving the second cam (240) to rotate in the second direction under the impact of water flow in the second branch pipe (202);
the second piston chamber is connected to the second liquid box (210) and the mixing chamber (10) separately; and
the second piston (209) is located in the second piston chamber, and is connected to the second cam (240), and when the second cam (240) rotates in the second direction, the second piston (209) reciprocates in the second piston chamber, to draw a second liquid in the second liquid box (210) into the second piston chamber, and squeeze the second liquid drawn into the second piston chamber into the mixing chamber (10).

4. The washing machine (100) according to claim 3, wherein the second piston chamber comprises a third sub-chamber and a fourth sub-chamber, the third sub-chamber is in communication with the second liquid box (210), a third one-way valve is disposed on the third sub-chamber, and enables the second liquid in the second liquid box (210) to flow into the third sub-chamber unidirectionally, the fourth sub-chamber is in communication with the mixing chamber (10), and a fourth one-way valve is disposed on the fourth sub-chamber, and enables the second liquid drawn into the second piston chamber to flow into the mixing chamber (10) unidirectionally.

5. The washing machine (100) according to claim 3, further comprising: a main pipe (213) that is in communication with the first branch pipe (201) and the second branch pipe (202) separately, wherein an outlet of the first branch pipe (201) and an outlet of the second branch pipe (202) separately face two sides of the impeller (204) in a radial direction.

6. The washing machine (100) according to claim 5, further comprising: a pre-washing pipe (214) that is in communication with the main pipe (213) and is located upstream the first branch pipe (201) and the second branch pipe (202).

7. The washing machine (100) according to claim 5, wherein a diameter of the main pipe (213) is greater than a diameter of the first branch pipe (201) and a diameter of the second branch pipe (202).

8. The washing machine (100) according to claim 1, wherein the detergent dispenser (20) further comprises: a counter (216), located on an impeller shaft of the impeller (204), and configured for recording the number of revolutions of the first cam (203).

9. The washing machine (100) according to claim 8, wherein the second condition comprises that: the number of revolutions of the first cam (203) corresponding to a count of the counter (216) satisfies a preset number of revolutions.

10. The washing machine (100) according to claim 1, wherein a water distribution plate (215) is disposed in the mixing chamber (10).

## Patentansprüche

1. Waschmaschine (100), die Folgendes umfasst: eine Steuerung und eine Waschmittelzugabevorrichtung (20), wobei die Waschmittelzugabevorrichtung (20) Folgendes umfasst: eine erste Zweigleitung (201), einen ersten Nocken (203), ein Flügelrad (204) und einen ersten Flüssigkeitsbehälter (207), wobei die Steuerung zum derartigen Steuern der ersten Zweigleitung (201) konfiguriert ist, dass diese geöffnet wird und so Wasser hereinlässt, wenn erkannt wird, dass ein Arbeitszustand der Waschmaschine (100) eine erste Bedingung erfüllt, und zum derartigen Steuern der ersten Zweigleitung (201), dass diese geschlossen wird, wenn erkannt wird, dass ein Arbeitszustand der Waschmittelzugabevorrichtung (20) eine zweite Bedingung erfüllt,
das Flügelrad (204) koaxial mit dem ersten Nocken (203) verbunden und zum derartigen Antreiben des ersten Nockens (203) ausgelegt ist, dass sich dieser unter Einfluss von in der ersten Zweigleitung (201) strömendem Wasser in der ersten Richtung dreht,
**dadurch gekennzeichnet, dass**
die Waschmaschine auch eine Mischkammer (10) umfasst,
dass die Waschmittelzugabevorrichtung (10) auch eine erste Kolbenkammer und einen ersten Kolben (206) umfasst,
dass mehrere erste Klinken (211) an dem ersten Nocken (203) angeordnet sind und zulassen, dass sich der ersten Nocken (203) in einer ersten Richtung dreht,
dass die erste Kolbenkammer mit dem ersten Flüssigkeitsbehälter (207) und der Mischkammer (10) separat verbunden ist und
dass sich der erste Kolben (206) in der ersten Kolbenkammer befindet und mit dem ersten Nocken (203) verbunden ist und sich, wenn sich der erste Nocken (203) in der ersten Richtung dreht, in der ersten Kolbenkammer hin- und herbewegt und so eine erste Flüssigkeit in dem ersten Flüssigkeitsbehälter (207) in die erste Kolbenkammer saugt und die in die erste Kolbenkammer gesaugte erste Flüssigkeit in die Mischkammer (10) presst.

2. Waschmaschine (100) nach Anspruch 1, wobei die erste Kolbenkammer eine erste Teilkammer (2051) und eine zweite Teilkammer (2052) umfasst, die erste Teilkammer (2051) mit dem ersten Flüssigkeitsbehälter (207) in Verbindung steht, ein erstes Einwegventil an der ersten Teilkammer (2051) angeordnet ist und zulässt, dass die erste Flüssigkeit in dem ersten Flüssigkeitsbehälter (207) in einer Richtung in die erste Teilkammer (2051) fließt, die zweite Teilkammer (2052) mit der Mischkammer (10) in Verbindung steht und ein zweites Einwegventil an der zweiten Teilkammer (2052) angeordnet ist und zulässt, dass die in die erste Kolbenkammer gesaugte erste Flüssigkeit in einer Richtung in die Mischkammer (10) fließt.

3. Waschmaschine (100) nach Anspruch 1 oder 2, wobei die Waschmittelzugabevorrichtung (20) ferner einen zweiten Nocken (240), mehrere zweite Klinken (212), eine zweite Zweigleitung (202), einen zweiten Flüssigkeitsbehälter (210), eine zweite Kolbenkammer und einen zweiten Kolben (209) umfasst und die mehreren zweiten Klinken (212) an dem zweiten Nocken (240) angeordnet sind und zulassen, dass sich dieser in einer zweiten Richtung dreht, wobei die Steuerung zum derartigen Steuern der zweiten Zweigleitung (202) konfiguriert ist, dass diese geöffnet wird und so Wasser hereinlässt, wenn erkannt wird, dass der Arbeitszustand der Waschmaschine (100) eine dritte Bedingung erfüllt, und zum derartigen Steuern der zweiten Zweigleitung (202), dass diese geschlossen wird, wenn erkannt wird, dass der Arbeitszustand der Waschmittelzugabevorrichtung (20) eine vierte Bedingung erfüllt,
wobei das Flügelrad (204) koaxial mit dem zweiten Nocken (240) verbunden und zum derartigen Antreiben des zweiten Nockens (240) ausgelegt ist, dass sich dieser unter Einfluss von in der zweiten Zweigleitung (202) strömendem Wasser in der zweiten Richtung dreht,
wobei die zweite Kolbenkammer mit dem zweiten Flüssigkeitsbehälter (210) und der Mischkammer (10) separat verbunden ist und
wobei sich der zweite Kolben (209) in der zweiten Kolbenkammer befindet und mit dem zweiten Nocken (240) verbunden ist und sich, wenn sich der zweite Nocken (240) in der zweiten Richtung dreht, in der zweiten Kolbenkammer hin- und herbewegt und so eine zweite Flüssigkeit in dem zweiten Flüssigkeitsbehälter (207) in die zweite Kolbenkammer saugt und die in die zweite Kolbenkammer gesaugte zweite Flüssigkeit in die Mischkammer (10) presst.

4. Waschmaschine (100) nach Anspruch 3, wobei die zweite Kolbenkammer eine dritte Teilkammer und eine vierte Teilkammer umfasst, wobei die dritte Teilkammer mit dem zweiten Flüssigkeitsbehälter (210) in Verbindung steht, ein drittes Einwegventil an der dritten Teilkammer angeordnet ist und zulässt, dass die zweite Flüssigkeit in dem zweiten Flüssigkeitsbehälter (210) in einer Richtung in die dritte Teilkammer fließt, die vierte Teilkammer mit der Mischkammer (10) in Verbindung steht und ein viertes Einwegventil an der vierten Teilkammer angeordnet ist und zulässt, dass die in die zweite Kolbenkammer gesaugte zweite Flüssigkeit in einer Richtung in die Mischkammer (10) fließt.

5. Waschmaschine (100) nach Anspruch 3, die ferner Folgendes umfasst: eine Hauptleitung (213), die separat mit der ersten Zweigleitung (201) und der zweiten Zweigleitung (202) in Verbindung steht, wobei ein Auslass der ersten Zweigleitung (201) und ein Auslass der zweiten Zweigleitung (202) separat in radialer Richtung zwei Seiten des Flügelrads (204) gegenüberliegen.

6. Waschmaschine (100) nach Anspruch 5, die ferner Folgendes umfasst: eine Vorwaschleitung (214), die mit der Hauptleitung (213) in Verbindung steht und stromaufwärts von der ersten Abzweigleitung (201) und der zweiten Abzweigleitung (202) liegt.

7. Waschmaschine (100) nach Anspruch 5, wobei ein Durchmesser der Hauptleitung (213) größer ist als ein Durchmesser der ersten Zweigleitung (201) und der zweiten Zweigleitung (202).

8. Waschmaschine (100) nach Anspruch 1, wobei die Waschmittelzugabevorrichtung (20) ferner Folgendes umfasst: einen Zähler (216), der sich an einer Flügelradwelle des Flügelrads (204) befindet und so konfiguriert ist, dass er die Anzahl Umdrehungen des ersten Nockens (203) aufzeichnet.

9. Waschmaschine (100) nach Anspruch 8, wobei die zweite Bedingung umfasst, dass: die Anzahl Umdrehungen des ersten Nockens (203) gemäß einer Zählung durch den Zähler (216) einer vorgegebenen Anzahl Umdrehungen entspricht.

10. Waschmaschine (100) nach Anspruch 1, wobei eine Wasserverteilungsplatte (215) in der Mischkammer (10) angeordnet ist.

## Revendications

1. Machine à laver (100), comprenant : une commande et un distributeur de détergent (20), dans laquelle le distributeur de détergent (20) comprend : un premier tuyau de ramification (201), une première came (203), une roue à ailettes (204) et un premier boîtier liquide (207), dans laquelle
la commande est configurée afin de commander le premier tuyau de ramification (201) pour qu'il s'ouvre afin de recevoir de l'eau quand il est détecté qu'un état de fonctionnement de la machine à laver (100) satisfait à une première condition, et de commander le premier tuyau de ramification (201) pour qu'il se ferme lorsqu'il est détecté qu'un état de fonctionnement du distributeur de détergent (20) satisfait à une seconde condition ;
la roue à ailettes (204) est raccordée de manière coaxiale à la première came (203), et est adaptée afin d'entraîner la première came (203) pour qu'elle tourne dans la première direction sous l'impact du flux d'eau dans la première conduite de ramification (201) ;
**caractérisée en ce que**
la machine à laver comprend également une chambre de mélange (10) ;
**en ce que** le distributeur de détergent (10) comprend également une première chambre à piston et un premier piston (206) ;
**en ce qu'**une pluralité de premiers cliquets (211) sont disposés sur la première came (203), et activent la première came (203) pour qu'elle tourne dans une première direction ;
**en ce que** la première chambre à piston est connectée au premier boîtier de liquide (207) et à la chambre de mélange (10) séparément ; et
**en ce que** le premier piston (206) est situé dans la première chambre de piston, et est connecté à la première came (203), et quand la première came (203) tourne dans la première direction, le premier piston (206) va et vient dans la première chambre de piston, afin d'attirer un premier liquide dans le premier boîtier de liquide (207) dans la première chambre de piston, et de presser le premier liquide attiré dans la première chambre de piston dans la chambre de mélange (10).

2. Machine à laver (100) selon la revendication 1, dans laquelle la première chambre de piston comprend une première sous-chambre (2051) et une deuxième sous-chambre (2052), la première sous-chambre (2051) est en communication avec le premier boîtier de liquide (207), une première vanne unidirectionnelle est disposée sur la première sous-chambre (2051), et permet au premier liquide dans le premier boîtier de liquide (207) de s'écouler dans la première sous-chambre (2051) de manière unidirectionnelle, la deuxième sous-chambre (2052) est en communication avec la chambre de mélange (10), et une deuxième soupape unidirectionnelle est disposée sur la deuxième sous-chambre (2052), et permet au premier liquide attiré dans la première chambre de piston de s'écouler dans la chambre de mélange (10) de manière unidirectionnelle.

3. Machine à laver (100) selon la revendication 1 ou 2, dans laquelle le distributeur de détergent (20) comprend en outre une deuxième came (240), une pluralité de deuxièmes cliquets (212), un deuxième tuyau de ramification (202), un deuxième boîtier de liquide (210), une deuxième chambre de piston, et un deuxième piston (209), et la pluralité de deuxièmes cliquets (212) sont disposés sur la deuxième came (240), et activer la deuxième came (240) pour qu'elle tourne dans une deuxième direction ;
le système de commande est configuré afin de commander le deuxième tuyau de ramification (202) pour qu'il s'ouvre afin de recevoir de l'eau lorsqu'il est détecté que l'état de fonctionnement de la machine à laver (100) satisfait à une troisième condition, et la commande du deuxième tuyau de ramification (202) pour qu'il se ferme lorsqu'il est détecté que l'état de fonctionnement du distributeur de détergent (20) satisfait à une quatrième condition ;
la roue à ailettes (204) est raccordée de manière coaxiale à la deuxième came (240), et est adaptée afin d'entraîner la deuxième came (240) pour qu'elle tourne dans la deuxième direction sous l'impact du flux d'eau dans le deuxième tuyau de ramification (202) ;
la deuxième chambre de piston est raccordée au deuxième boîtier de liquide (210) et à la chambre de mélange (10) séparément ; et
le deuxième piston (209) est situé dans la deuxième chambre de piston, et est connecté à la deuxième came (240), et quand la deuxième came (240) tourne dans la deuxième direction, le deuxième piston (209) va et vient dans la deuxième chambre de piston, afin d'attirer un deuxième liquide dans le deuxième boîtier de liquide (210) dans la deuxième chambre de piston et de comprimer le deuxième liquide attiré dans la deuxième chambre de piston dans la chambre de mélange (10).

4. Machine à laver (100) selon la revendication 3, dans laquelle la deuxième chambre de piston comprend une troisième sous-chambre et une quatrième sous-chambre, la troisième sous-chambre est en communication avec le deuxième boîtier de liquide (210), une troisième soupape unidirectionnelle est disposée sur la troisième sous-chambre, et permet au deuxième liquide dans le deuxième boîtier de liquide (210) de s'écouler dans la troisième sous-chambre de manière unidirectionnelle, la quatrième sous-chambre est en communication avec la chambre de mélange (10) et une quatrième soupape unidirectionnelle est disposée sur la quatrième sous-chambre et permet au deuxième liquide attiré dans la deuxième chambre de piston de s'écouler dans la chambre de mélange (10) de manière unidirectionnelle.

5. Machine à laver (100) selon la revendication 3, comprenant en outre un tuyau principal (213) qui est en communication avec le premier tuyau de ramification (201) et le deuxième tuyau de ramification (202) séparément, dans laquelle une sortie du premier tuyau de ramification (201) et une sortie du deuxième tuyau de ramification (202) font face séparément à deux côtés de la roue à ailettes (204) dans une direction radiale.

6. Machine à laver (100) selon la revendication 5, comprenant en outre : un tuyau de prélavage (214) qui est en communication avec le tuyau principal (213) et est situé en amont du premier tuyau de ramification (201) et du deuxième tuyau de ramification (202).

7. Machine à laver (100) selon la revendication 5, dans laquelle un diamètre du tuyau principal (213) est supérieur à un diamètre du premier tuyau de ramification (201) et à un diamètre du deuxième tuyau de ramification (202).

8. Machine à laver (100) selon la revendication 1, dans laquelle le distributeur de détergent (20) comprend en outre : un compteur (216), situé sur un arbre de roue à ailettes de la roue à ailettes (204), et configuré afin d'enregistrer le nombre de tours de la première came (203).

9. Machine à laver (100) selon la revendication 8, dans laquelle la seconde condition comprend le fait que le nombre de tours de la première came (203) correspondant à un décompte du compteur (216) satisfait à un nombre préétabli de tours.

10. Machine à laver (100) selon la revendication 1, dans laquelle une plaque de distribution d'eau (215) est disposée dans la chambre de mélange (10).
